# EUROPÄISCHE PATENTSCHRIFT

(11) **EP 0 872 451 B1**
(45) Veröffentlichungstag und Bekanntmachung des Hinweises auf die Patenterteilung: **04.12.2002**
(21) Anmeldenummer: 98106387.8
(22) Anmeldetag: 08.04.1998
(51) Int. Cl.: C02F 3/30, C02F 3/00

(54) **Verfahren zur Reinigung ammoniumhaltigen Abwassers**
Process for purifying ammonium-containing waste waters
Procédé pour la purification des eaux usées contenant de l'ammonium

(30) Priorität: 14.04.1997 AT 63197
(43) Veröffentlichungstag der Anmeldung: 21.10.1998
(73) Patentinhaber: INGERLE, Kurt, A-6020 Innsbruck (AT); Rostek, Reinhard, 6020 Innsbruck (AT); Wett, Bernhard, 6020 Innsbruck (AT)
(72) Erfinder: INGERLE, Kurt, A-6020 Innsbruck (AT); Rostek, Reinhard, 6020 Innsbruck (AT); Wett, Bernhard, 6020 Innsbruck (AT)
(74) Vertreter: Hofinger, Engelbert, Dr.Dr.

(56) Entgegenhaltungen:
- EP-A- 0 086 587
- EP-A- 0 710 626
- EP-A- 0 751 098
- DE-A- 4 024 947
- US-A- 4 655 925

## Beschreibung

Die Erfindung bezieht sich auf ein Verfahren zur Reinigung ammoniumhaltigen Abwassers in einem Becken durch Nitrifikation und Denitrifikation, bei dem der pH-Wert dauernd überwacht und ein Pendeln des pH-Wertes erzielt wird, indem bei eingeschalteter Belüftung der pH-Wert aufgrund der Nitrifikation abfällt und erst nach Ausschalten der Belüftung durch Denitrifikation und gegebenenfalls Zufuhr von Lauge wieder ansteigt, woraufhin neuerlich belüftet wird.

Durch die Rückführung von mit Ammonium stark belasteten Filtraten und Zentraten der anoeroben Schlammbehandlung einer kommunalen Kläranlage in die Belebungsstufe wird viel zusätzliches Beckenvolumen benötigt. Zusätzlich kann es bei ungünstigem BSBS/N-Verhältnis zu einer ungenügenden Denitrifikation kommen. Um Abhilfe zu schaffen, bietet sich eine separate Stickstoffelimination aus den hochbelasteten Filtraten und Zentraten der anaeroben Schlammbehandlung an. Auf ähnliche Weise kann man mit stark ammoniumhältigen Abwässern der Industrie verfahren.

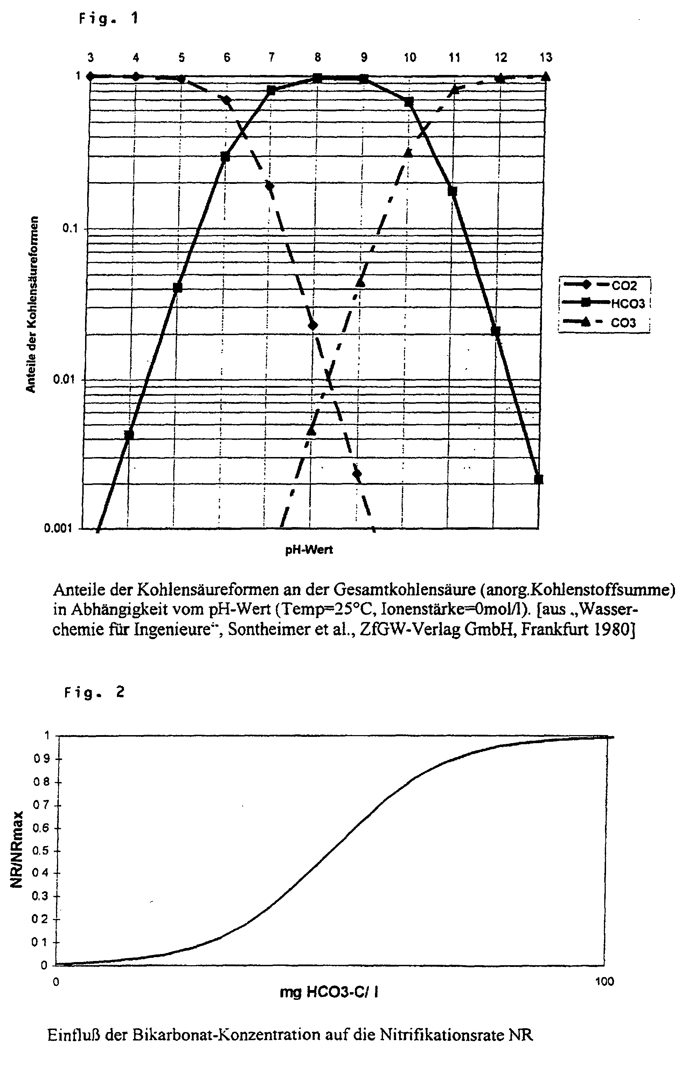

Die Erfindung geht hingegen von der Erkenntnis aus, daß limitierender Faktor bei der Reinigungsleistung ein Mangel an anorganischem Kohlenstoff ist, welchen die nitrifizierenden Bakterien als autotrophe Organismen benötigen. Der anorganische Kohlenstoff liegt in wässriger Lösung in drei verschiedenen Formen vor, nämlich als CO₂, als Bicarbonat und als Carbonat. Die Aufteilung der drei Formen hängt vom pH-Wert in einer aus Fig. 1 ersichtlichen Weise ab.

Da nitrifizierende Bakterien den anorganischen Kohlenstoff bevorzugt in Form von Bicarbonat aufnehmen (vgl. Fig. 2), bedeutet jedes Absenken des pH-Wertes unter 8,0 eine verschlechterte Ausnützung des an sich jedoch nicht knappen anorganischen Kohlenstoffes. Eine solche Verringerung des pH-Wertes ist jedoch andererseits wünschenswert, um bei gegebener Alkalinität des Abwassers maximale Nitrifikation und damit Reinigung zu erzielen bzw. um einen gewünschten Reinigungsgrad mit möglichst geringem Zusatz von alkalischen Mitteln, wie z.B. Kalkmilch, zu erzeugen.

Als entscheidend hat sich gegenüber solchen Überlegungen herausgestellt, daß Belüftung des Abwassers bei pH-Werten unter 7,1 zu raschem Verlust an anorganischem Kohlenstoff durch Austreiben von CO₂ führen kann. Dieser Kohlenstoff steht somit auch nach einer neuerlichen Erhöhung des pH-Wertes nicht mehr in der benötigten Form als Bicarbonat für die Ernährung der Bakterien zur Verfügung. Da die Belüftung als solche durch die damit einhergehende Nitrifikation zu einem Absenken des pH-Wertes führt, kommt es somit entscheidend darauf an, das Verfahren so zu steuern, daß zwar bei möglichst niedrigem pH-Wert gearbeitet wird, um die vorhandene Alkalinität möglichst auszunützen, daß andererseits dadurch aber nicht der an sich hinreichend (> 50 mg/l HCO₃) vorhandene anorganische Kohlenstoff durch sogenanntes Stripping von CO₂ verlorengeht.

Aus DE 37 14 370 A1 ist ein Verfahren der eingangs skizzierten Art bekannt geworden, bei welchem unabhängig von Überlegungen betreffend den anorganischen Kohlenstoff für den Stoffwechsel der Nitrifikanten ein pH-Bereich von 7 - 8 als optimal bezeichnet wird. Beim bekannten Verfahren finden Belüftung und Sedimentation in verschiedenen Becken statt, wobei nach Erreichen des vorgegebenen minimalen pH-Wertes eine bestimmte Menge Schlamm-Wasser-Gemisch entnommen und nach Erreichen des maximalen pH-Wertes aus dem Sedimentationsbecken Rücklaufschlamm zugeführt wird.

Der Erfindung liegt die Aufgabe zugrunde, das bekannte Verfahren im Rahmen der sogenannten Einbecken-Technologie anwendbar zu machen, welche dadurch gekennzeichnet ist, daß im selben Becken Belüftung und Sedimentation erfolgen, eine Belüftungsphase also jeweils von einer Absetzphase abgelöst wird. Während der Absetzphase kann mangels Belüftung keine Nitrifikation, wohl aber Denitrifikation erfolgen. Dadurch steigt der pH-Wert, was zur Folge haben kann, daß mit dem abgezogenen Abwasser Alkalinität in erheblichem Ausmaß verloren geht. Um dies zu vermeiden, kann man am Ende der Belüftungsphase bewußt eine ungenügende Versorgung der Bakterien mit Bicarbonat und einen Verlust an anorganischem Kohlenstoff in Kauf nehmen. Erfindungsgemäß ist also vorgesehen, daß bei Verwendung eines Beckens, in dem Belüftung, Sedimentation und Reinwasserabzug nacheinander erfolgen, in der Belüftungsphase bei intermittierender Belüftung der pH-Wert zunächst zwischen einer mindestens 7,0 betragenden unteren Grenze und einer höchstens 8,0 betragenden oberen Grenze pendelt und gegen Ende der Belüftungsphase der pH-Wert unter 6,9, vorzugsweise unter 6,7, abgesenkt wird.

Ein besonderer Vorteil des erfindungsgemäßen Verfahrens liegt darin, daß als Quelle anorganischen Kohlenstoffes kein oder wenig Rohschlamm zugegeben werden muß, sodaß tatsächlich von einer gesonderten Behandlung des ammoniumhaltigen Abwassers gesprochen werden kann. Es genügt, wenn die Zugabe von Rohschlamm in Abhängigkeit von der Zugabe der Ammoniumfracht so erfolgt, daß im Gesamtzulauf zum Reaktor das Gewichtsverhältnis CSB / NH₄-N im Bereich 1,5 bis 4,0 liegt. Das Optimum liegt dabei bei 2,5.

Um die für die Nitrifikation erforderliche Alkalinität aufzubringen, genügt häufig der von vorneherein hohe pH-Wert des zu behandelnden Abwassers. Ansonsten kann vorgesehen werden, daß bei zu niederer Alkalinität des ammoniumhaltigen Abwassers die Alkalinität des Gesamtzulaufes zum Reaktor durch Zugabe von alkalischen Mitteln wie z.B. Kalkmilch angehoben wird (Säurekapazität SK ≥ 1 mol/mol NH₄).

Unter den erfindungsgemäßen Verfahrensbedingungen erhält man eine besonders hohe Nitrifikationsrate, wenn die Trockensubstanz zwischen 10 und 20 g/l, das Schlammalter über 2 Wochen und die Temperatur über 20°C gehalten wird.

Es ist bekannt, daß bei hoher Ammoniakkonzentration die Nitrifikation nur teilweise als Nitratation erfolgt. Sorgt man dafür, daß die Ammoniakkonzentration über 0,5 mg/l bleibt, wird die Umwandlung des Nitrits in Nitrat gehemmt, was den Sauerstoffbedarf der Nitrifikation und den organischen Kohlenstoffbedarf der Denitrifikation senkt.

Eine weitere Erläuterung der Erfindung erfolgt anschließend anhand eines Ausführungsbeispieles.

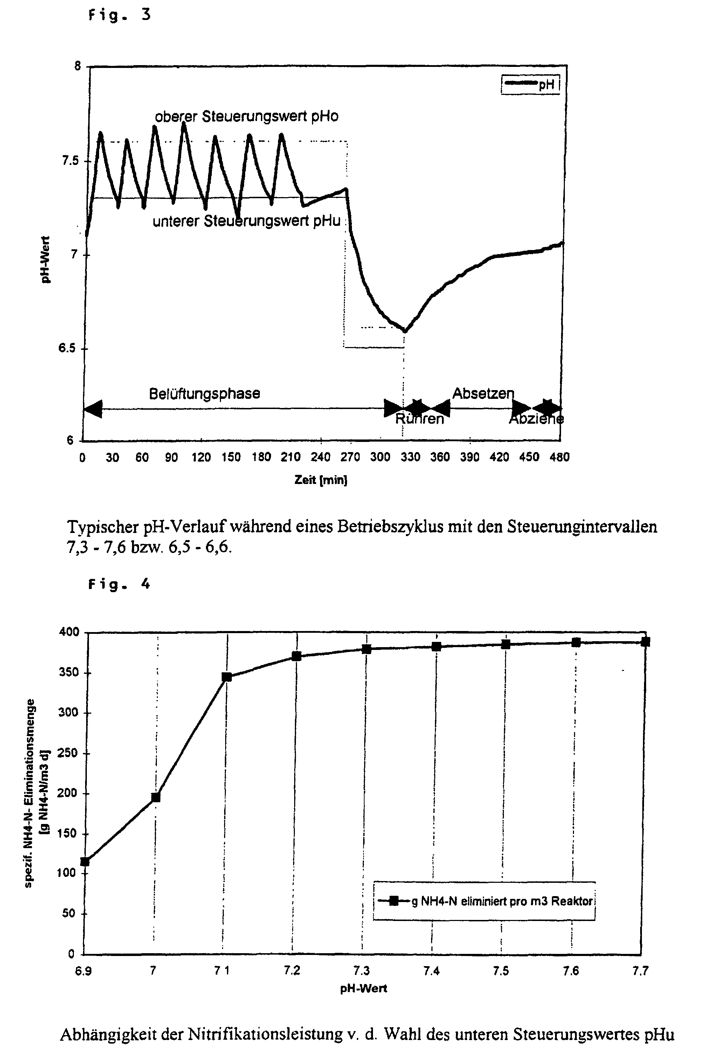

Dieses wurde in einer Pilotanlage mit den Abmessungen L=23,0 m, B= 5,4 m, F= 5,0 m durchgeführt. Es wurden drei Zyklen pro Tag (Belüften 5^{h}30', Rühren 20', Absetzen 100' und Abziehen 30' = Zyklus 8^{h}) gefahren. Als intern verfügbare Kohlenstoffquelle wurde Rohschlamm aus der Vorklärung verwendet. Zur einfachen Steuerung des Prozesses wird das hochkonzentrierte Ammoniumabwasser während der Belüftungsphase in solcher konstanter Menge zugegeben, daß bei eingeschalteter Belüftung der pH-Wert nicht ansteigt, sondern abfällt. Bei Erreichen eines vorgegebenen unteren Steuer-pH-Wertes wird die Belüftung unterbrochen. Durch Prozeßwasserzulauf und Denitrifikation steigt der pH-Wert an und beim Erreichen des oberen Grenzwertes schaltet sich die Belüftung wieder ein. Auf diese Weise pendelt der pH-Wert in der Belüftungsphase zwischen zwei vorgegebenen Grenzwerten. Zusätzlich wird der Sauerstoffgehalt O₂ mit Hilfe einer O₂-Sonde in einem gewünschten Bereich gehalten. Am Ende der B-Phase wird der pH-Wert erfindungsgemäß zur Nützung der hohen Alkalinität kurzzeitig unter 7,0 abgesenkt. Zur Darstellung eines sinnvollen Steuerungsprogrammes wurden beim angeführten Beispiel in Fig. 3 Steuerungsintervalle zwischen 7,3 und 7,6 bzw.in der letzten Stunde der Belüftungsphase zwischen 6,5 und 6,6 gewählt. Fig. 4 zeigt die Abhängigkeit der Reinigungsleistung von der Wahl des unteren Grenzwertes (pH=7,3 in Fig. 3).

Die Zugabe des Rohschlammes erfolgt zweckmäßigerweise in den unbelüfteten Phasen des SBR-Zyklus in Abhängigkeit des zugeführten Ammoniumabwassers nur in solcher Menge, daß der Kohlenstoffbedarf des Prozesses abgedeckt werden kann. Eine größere Menge als erforderlich reduziert die Temperatur und das Schlammalter im Reaktor und ist deshalb zu vermeiden. Vorversäuerter Primärschlamm eignet sich viel besser für den vorgesehenen Zweck als unversäuerter. Er führt zu einer höheren Denitrifikationsrate im SBR-System. Durch die erhöhte Ammoniakkonzentration wird die Nitratation weitgehend gehemmt (Umwandlung von Nitrit in Nitrat). Dadurch wird der Sauerstoffbedarf der Nitrifikation und der organische Kohlenstoffbedarf der Denitrifikation gesenkt.

Von großer Bedeutung bezüglich der Wirtschaftlichkeit des Verfahrens ist die Erhaltung einer hohen Temperatur, einer hohen Trockensubstanz und eines hohen Schlammalters. Eine hohe Temperatur erzielt man durch die Nutzung der hohen Temperatur des Filtrates bzw. des Zentrates und durch Vermeidung von Wärmeverlusten durch entsprechende Isolierung der Becken und der Leitungen. Die hohe Trockensubstanz bis 20 g/l im SBR-Reaktor ergibt sich durch die im Filtrat bzw. Zentrat enthaltenen Flockungsmittel sowie durch die gute Eindickbarkeit des Rohschlammes.

Der im Reaktor sich bildende Überschußschlamm kann entweder am Ende der Abziehphase getrennt abgezogen und behandelt oder gemeinsam mit dem Überwasser einer biologischen Stufe einer Kläranlage zugeführt werden.

## Patentansprüche

1. Verfahren zur Reinigung ammoniumhaltigen Abwassers in einem Becken durch Nitrifikation und Denitrifikation, bei dem der pH-Wert dauernd überwacht und ein Pendeln des pH-Wertes erzielt wird, indem bei eingeschalteter Belüftung der pH-Wert aufgrund der Nitrifikation abfällt und erst nach Ausschalten der Belüftung durch Denitrifikation und gegebenenfalls Zufuhr von Lauge wieder ansteigt, woraufhin neuerlich belüftet wird, **dadurch gekennzeichnet, daß** bei Verwendung eines Beckens, in dem Belüftung, Sedimentation und Reinwasserabzug nacheinander erfolgen, in der Belüftungsphase bei intermittierender Belüftung der pH-Wert zunächst zwischen einer mindestens 7,0 betragenden unteren Grenze und einer höchstens 8,0 betragenden oberen Grenze pendelt und gegen Ende der Belüftungsphase der pH-Wert unter 6,9, vorzugsweise unter 6,7, abgesenkt wird.

2. Verfahren nach Anspruch 1, **dadurch gekennzeichnet, daß** Zugabe von Rohschlamm als Quelle von anorganischem Kohlenstoff in Abhängigkeit von der Zugabe der Ammoniumfracht so erfolgt, daß im Gesamtzulauf zum Reaktor das Gewichtsverhältnis CSB / NH₄-N im Bereich 1,5 bis 4,0 liegt.

3. Verfahren nach einem der Ansprüche 1 oder 2, **dadurch gekennzeichnet, daß** die Alkalinität des Gesamtzulaufes zum Reaktor durch Zugabe von alkalischen Mitteln wie z.B. Kalkmilch angehoben wird (Säurekapazität SK ≥ 1 mol/mol NH4).

4. Verfahren nach einem der Ansprüche 1 - 3, **dadurch gekennzeichnet, daß** die Trockensubstanz im Reaktor zwischen 10 und 20 g/l gehalten wird.

5. Verfahren nach einem der Ansprüche 1 -4, **dadurch gekennzeichnet, daß** die Ammoniakkonzentration über 0,5 mg/l gehalten wird.

6. Verfahren nach einem der Ansprüche 1 - 5, **dadurch gekennzeichnet, daß** die Rohschlammzugabe so dosiert wird, daß dadurch die Temperatur des Abwassers nicht unter 20°C gesenkt wird.

7. Verfahren nach den Ansprüchen 1 bis 6 **dadurch gekennzeichnet, daß** das ammoniumhaltige Abwasser derart gespeichert wird, daß man einen Wochenausgleich erzielt.

8. Verfahren nach einem der Ansprüche 1 - 7, **dadurch gekennzeichnet, daß** der Zyklus der Anlage die Phasen Belüften, Rühren, Vorabsetzen und Abziehen aufweist.

9. Verfahren nach einem der Ansprüche 1 bis 8, **dadurch gekennzeichnet, daß** die Sauerstoffkonzentration im Reaktor bei eingeschalteter Belüftung durch eine O₂-Sonde in einem vorgegebenen Bereich zwischen 1,5 und 3,0 mg/l gehalten wird.

10. Verfahren nach einem der Ansprüche 1 - 9, **dadurch gekennzeichnet, daß** im Gleichgewichtszustand das Schlammalter mehr als zwei Wochen beträgt.

11. Verfahren nach einem der vorhergehenden Ansprüche, **dadurch gekennzeichnet, daß** der pH-Wert auch am Ende der Belüftungsphase nicht unter 6,0 abgesenkt wird.

## Claims

1. A method of purifying ammonium-bearing sewage in a basin by nitrification and denitrification, in which the pH-value is continuously monitored and a cyclic variation in the pH-value is achieved by a procedure whereby when ventilation is switched on the pH-value falls by virtue of nitrification and rises again only after the ventilation is switched off due to denitrification and possibly the supply of lye solution, whereupon ventilation is further effected, **characterised in that** when using a basin in which ventilation, sedimentation and pure water withdrawal take place in succession, in the ventilation phase with intermittent ventilation the pH-value initially cyclically varies between a lower limit of at least 7.0 and an upper limit of at most 8.0 and towards the end of the ventilation phase the pH-value is reduced to below 6.9, preferably below 6.7.

2. A method according to claim 1 **characterised in that** the addition of raw sludge as a source of inorganic carbon is effected in dependence on the addition of the ammonium loading in such a way that in the total feed to the reactor the weight ratio CSB/MH₄-N is in the range of 1.5 to 4.0.

3. A method according to one of claims 1 and 2 **characterised in that** the alkalinity of the overall feed to the reactor is lifted by the addition of alkaline agents such as for example lime milk (acid capacity SC ≥ mol/mol NK₄).

4. A method according to one of claims 1 to 3 **characterised in that** the dry substance in the reactor is kept between 10 and 20 g/l.

5. A method according to one of claims 1 to 4 **characterised in that** the concentration of ammonia is kept above 0.5 mg/l.

6. A method according to one of claims 1 to 5 **characterised in that** the addition of raw sludge is so metered that the temperature of the sewage is not reduced below 20°C thereby.

7. A method according to claims 1 to 6 **characterised in that** the ammonium-bearing sewage is stored in such a way that weekly equalisation is achieved.

8. A method according to one of claims 1 to 7 **characterised in that** the cycle of the installation involves the phases of ventilation, agitation, pre-settlement and drawing off.

9. A method according to one of claims 1 to 8 **characterised in that** the concentration of oxygen in the reactor when the ventilation is switched on is kept by an O₂-probe in a predetermined range of between 1.5 and 3.0 mg/l.

10. A method according to one of claims 1 to 9 **characterised in that** in the equilibrium condition the sludge age is more than two weeks.

11. A method according to one of the preceding claims **characterised in that** the pH-value is not reduced below 6.0 even at the end of the ventilation phase.

## Revendications

1. Procédé de purification des eaux usées contenant de l'ammonium dans un bassin d'évacuation, par nitrification et dénitrification, dans lequel on surveille le pH en permanence et on atteint une oscillation du pH, dans lequel, le pH, au début de l'aération, diminue en raison de la nitrification, puis remonte uniquement à la fin de l'aération, sous l'effet de la dénitrification et éventuellement de l'introduction d'une base, après quoi on aère de nouveau, **caractérisé en ce que**, lorsque l'on utilise un bassin d'évacuation, dans lequel une aération, une sédimentation et une évacuation de l'eau pure se succèdent, le pH oscille entre une limite inférieure s'élevant au minimum à 7,0 et une limite supérieure s'élevant au maximum à 8,0 au cours de la phase d'aération lors d'une aération en discontinu, et **en ce que** le pH, vers la fin de la phase d'aération, ne descend pas, de préférence, en dessous de 6,7.

2. Procédé selon la revendication 1, **caractérisé en ce que** l'on réalise l'addition d'une boue en tant que source de carbone inorganique indépendamment de l'introduction de la charge d'ammonium, de sorte que dans l'alimentation totale fournie au réacteur, le rapport pondéral CSB/NH₄-N est compris dans la gamme de 1,5 à 4,0.

3. Procédé selon l'une quelconque des revendications 1 à 2, **caractérisé en ce que** l'on augmente l'alcalinité de l'alimentation totale introduite dans le réacteur par addition d'un milieu basique tel que le lait de chaux (alcalinité SK ≥ 1 mol/mol de NH₄).

4. Procédé selon l'une quelconque des revendications 1 à 3, **caractérisé en ce que** l'on obtient entre 10 et 20 g/L de matière sèche dans le bassin d'évacuation.

5. Procédé selon l'une quelconque des revendications 1 à 4, **caractérisé en ce que** la concentration en ammoniac est supérieure à 0,5 mg/L.

6. Procédé selon l'une quelconque des revendications 1 à 5, **caractérisé en ce que** l'on dose l'addition de boue de sorte que la température des eaux usées ne descende pas en dessous de 20°C.

7. Procédé selon les revendications 1 à 6, **caractérisé en ce** l'on stocke les eaux usées contenant de l'ammoniac pendant une semaine.

8. Procédé selon l'une quelconque des revendications 1 à 7, **caractérisé en ce que** le cycle de l'installation présente les phases d'aération, d'agitation, de pré-sédimentation et d'évacuation.

9. Procédé selon l'une quelconque des revendications 1 à 8, **caractérisé en ce que** l'on maintient la concentration en oxygène dans le bassin d'évacuation au début de l'aération, à l'aide d'une sonde à oxygène, dans une gamme prédéfinie comprise entre 1,5 et 3,0 mg/L.

10. Procédé selon l'une quelconque des revendications 1 à 9, **caractérisé en ce que** l'âge de la boue à l'état d'équilibre n'est pas supérieur à deux semaines.

11. Procédé selon l'une quelconque des revendications 1 à 10, **caractérisé en ce que** l'on n'abaisse pas le pH en dessous de 6,0 également à la fin de la phase d'aération.
